# EUROPÄISCHE PATENTSCHRIFT

(11) **EP 1 358 036 B1**
(45) Veröffentlichungstag und Bekanntmachung des Hinweises auf die Patenterteilung: **11.08.2004**
(21) Anmeldenummer: 02719788.8
(22) Anmeldetag: 08.02.2002
(51) Int. Cl.: B23K 26/067

(54) **VORRICHTUNG ZUR SUBSTRATBEHANDLUNG MITTELS LASERSTRAHLUNG**
DEVICE FOR TREATING SUBSTRATES BY LASER IRRADIATION
DISPOSITIF DE TRAITEMENT DE SUBSTRATS PAR RAYONNEMENT LASER

(30) Priorität: 09.02.2001 DE 10105878
(43) Veröffentlichungstag der Anmeldung: 05.11.2003
(73) Patentinhaber: MLT Micro Laser Technology GmbH, 85551 Kirchheim (DE)
(72) Erfinder: PAUL, Helmut, 85221 Dachau (DE)
(74) Vertreter: Manitz, Finsterwald & Partner GbR
(86) Internationale Anmeldenummer: PCT/EP2002/001348
(87) Internationale Veröffentlichungsnummer: WO 2002/064302

(56) Entgegenhaltungen:
- EP-A- 0 798 067
- DE-A- 2 918 283
- US-A- 6 034 349

## Beschreibung

Die Erfindung betrifft eine Vorrichtung zur Substratbehandlung mittels Laserstrahlung, mit einem Drehspiegel durch den ein einfallender Laserstrahl reflektiert wird und über eine Anordnung von nebeneinander liegenden Sammellinsen schwenkbar ist, die in einem ihrer Brennweite entsprechenden Abstand vom durch eine bewegte Materialbahn gebildeten Substrat angeordnet sind.

Eine derartige Vorrichtung wird insbesondere zum Bearbeiten von beispielsweise bandförmigen Materialien mittels Laserstrahlung verwendet, wobei das Laserlicht in mehrere quasi-simultane Bearbeitungsstellen aufgeteilt und gleichzeitig aus dem Dauerlicht des Lasers kurze Pulse sehr hoher Frequenz erzeugt werden. Die hohe Pulswiederholungsrate resultiert in entsprechend hohen Bearbeitungsgeschwindigkeiten.

Trotz des Einsatzes weniger oder lediglich eines einzelnen Lasers ist eine nahezu gleichzeitige Beaufschlagung des Substrats in mehreren Zielgebieten möglich. Die Anwendung mehrerer Laser verbietet sich in der Regel aus Kosten- und Platzgründen. Eine, Strahlaufteilung durch sogenannte Strahlteiler wäre insoweit nachteilig, als die resultierenden Teilstrahlen eine entsprechend geringere Intensität aufweisen würden, die für bestimmte Bearbeitungsverfahren nicht ausreichend ist. Überdies würden die Teilstrahlen auch eine wechselnde, d. h. jedenfalls unterschiedliche Intensität und/oder räumliche Intensitätsverteilung aufweisen. So ist bei Strahlteilern häufig die unterschiedliche Beeinflussung des Strahlprofiles das Hauptproblem, insbesondere bei Verschmutzung (Strahlgeometrie).

Beispielsweise bei der Perforierung von Papier mittels Laserlichtstrahlen ist es zur Erzielung einer gleichmäßigen Lochgröße und Güte unbedingt erforderlich, eine bestimmte, relativ hohe und gleichbleibende Intensität des die Perforation durchführenden Laserlichtstrahls sicherzustellen. Eine Strahlteilung wäre somit auch hier wieder ungünstig.

Vorrichtungen der eingangs genannten Art (vgl. z. B. DE-C-2918283) werden insbesondere zur Perforation von dünnen Papieren wie beispielsweise Zigarettenmundstückpapier verwendet. Dabei erzeugt die Vorrichtung pro Bearbeitungskopf jeweils eine Spur von kleinen Löchern, wobei das Dauerlicht des Lasers mit Hilfe eines optischen Multiplexers in gepulste Einzelstrahlen zerhackt wird. Jeder fokussierte Laserpuls verdampft schlagartig das dünne Material und erzeugt somit ein Loch mit einem üblichen Durchmesser von beispielsweise etwa 60 bis etwa 150 µm. Eine betreffende Vorrichtung kann z. B. 16 Bearbeitungsköpfe aufweisen und somit Papier mit beispielsweise vier Perforationszonen mit jeweils vier Lochreihen und einer dazu passenden Breite von etwa 150 mm bei mehreren 100 m/min Bahngeschwindigkeit perforieren. Die Perforation ist demnach auf wenige Zonen quer zur Bahn konzentriert und in Längsrichtung sehr dicht angeordnet.

In den letzten Jahren entstand ein Bedarf an einer Perforation von Verpackungsfolien mit praktisch den gleichen Lochdurchmessern, jedoch stark veränderter Anordnung und Verteilung der Löcher. So werden für die Perforation von Verpackungsmaterialien wie z. B. Kunststoffolien wesentlich kleinere Lochdichten, also vielfach größere Lochabstände benötigt. Dabei sollen die Bahngeschwindigkeit und die Energie pro Loch zumindest im wesentlichen unverändert bleiben. Die geringeren Lochdichten dienen einer höheren Reißfestigkeit und einer geringeren Durchlässigkeit.

Beispielsweise bei der aus der DE-C-2918283 bekannten Vorrichtung könnte man die gewünschten großen Lochabstände zwar mit niedrigen Spiegeldrehzahlen erreichen. Die jeweiligen Pulsenergien wären dann jedoch viel zu hoch, um noch ein sauberes Loch zu erzielen. Um hier gegenzusteuern, müßte man die Ausgangsleistung an den Lasern reduzieren, was jedoch nicht oder nicht in dem erforderlichen Umfang möglich ist. Eine Vergrößerung des Lochabstands durch Erhöhung der Bahngeschwindigkeit des bahnförmigen Materials der zu perforierenden Bahn ist derzeit nicht ohne weiteres beherrschbar, da Geschwindigkeiten von mehreren 1000 m/min erforderlich wären.

Ein Ziel der Erfindung ist es, eine Vorrichtung der eingangs genannten Art zu schaffen, die insbesondere sowohl die Erzeugung von an beliebiger Stelle und entsprechend einer einstellbaren, beliebigen Dauer unterbrochenen Perforationszonen als auch eine gleichmäßigere Verteilung der Perforationen ermöglicht. Überdies soll insbesondere auch die Erzeugung von Perforationsmustern mit einem größerem Lochabstand zumindest im wesentlichen ohne Änderung der Bahngeschwindigkeit und der Energie pro Loch möglich sein. Ein weiteres Ziel der Erfindung ist es, erforderlichenfalls das visuelle Erscheinungsbild der Perforation ohne wesentliche Änderung der technischen Eigenschaften ändern zu können, d.h. bei bestimmten Anwendungen die Sichtbarkeit bzw. Unsichtbarkeit der Perforation entsprechend beeinflussen zu können.

Diese Aufgabe wird nach der Erfindung dadurch gelöst, daß in wenigstens einem der zwischen dem Drehspiegel und den Sammellinsen gebildeten Strahlpfade ein opto-mechanischer Schalter und/oder Variator vorgesehen ist, durch den der betreffende Strahlpfad unterbrechbar bzw. die Position des betreffenden Fokus auf dem Substrat variierbar ist.

Aufgrund dieser Ausbildung ist es nicht nur möglich, die jeweiligen Perforationszonen an beliebiger Stelle beliebig lange zu unterbrechen. Es ist auch eine gleichmäßigere Verteilung der Perforationen möglich. Die Perforationsmuster können mit einem größeren Lochabstand als bisher erzeugt werden, ohne daß dazu die Bahngeschwindigkeit und die Energie pro Loch wesentlich verändert werden muß. Während die Perforationsspuren bisher prinzipiell in Reihen mit geringem Lochabstand von typisch 0,5 bis 1 mm angeordnet waren, sind nunmehr beliebig größere Abstände möglich, wobei der Lochabstand insbesondere variabel vergrößert werden kann. Alternativ oder zusätzlich besteht die Möglichkeit, eine insbesondere beliebig einstellbare Unordnung des Perforationsmusters, d.h. insbesondere eine Art "Chaos-Perforation" zu erzeugen, bei der sich anstelle einer jeweiligen geraden Perforationsspur eine insbesondere frei programmierbare "zittrige" oder "tänzelnde" Einzelspur ergibt.

Bei einer zweckmäßigen praktischen Ausführungsform der erfindungsgemäßen Vorrichtung ist in jedem zwischen dem Drehspiegel und den Sammellinsen gebildeten Strahlpfad jeweils ein opto-mechanischer Schalter bzw. Variator vorgesehen. Damit ist jeder dieser Strahlpfade in der jeweils gewünschten Weise beeinflußbar.

Von Vorteil ist auch, wenn der einfallende Laserstrahl durch eine Linse auf den Drehspiegel fokussiert wird, zwischen dem Drehspiegel und der Anordnung von in einem ihrer Brennweite entsprechenden Abstand vom Substrat angeordneten nebeneinander liegenden Sammellinsen eine weitere Anordnung von nebeneinander liegenden Sammellinsen vorgesehen ist, die in einem ihrer Brennweite entsprechenden Abstand zum Drehspiegel angeordnet sind, und ein jeweiliger opto-mechanischer Schalter bzw. Variator zwischen den beiden Anordnungen von nebeneinander liegenden Sammellinsen angeordnet ist.

Bei einer bevorzugten Ausführungsform der erfindungsgemäßen Vorrichtung ist der opto-mechanische Schalter bzw. Variator im Zwischenfokus eines teleskopartigen Linsensystems angeordnet.

Als Drehspiegel kann insbesondere ein Polygon-Drehspiegel vorgesehen sein. Mit einem solchen Polygon-Drehspiegel mit entsprechend vielen Facetten und hoher Drehzahl können relativ hohe Frequenzen erreicht werden, so daß beispielsweise beim Einsatz der Vorrichtung zur Perforation von Zigarettenpapier der die Geschwindigkeit bestimmende Schritt nicht mehr die Perforationsfrequenz, sondern die technisch realisierbare Papiervorschubgeschwindigkeit ist. Es ist lediglich ein einziges drehendes Teil, nämlich der Polygon-Drehspiegel, erforderlich, um die hohen Zerhackungsfrequenzen zu erreichen.

Die Linsen, zwischen denen der Drehspiegel liegt, können z.B. sphärische und/oder zylindrische Sammellinsen sein. Dabei besitzen sphärische Linsen den Vorteil, daß die benötigte Reflexionsfläche/-breite auf dem Polygon und damit das Gewicht und entsprechend die Massenträgheit klein gehalten werden können.

Dem opto-mechanischen Schalter ist vorzugsweise eine insbesondere frei programmierbare Ansteuerelektronik zugeordnet, über die die Unterbrechungszeiten und/oder -zeitdauern bzw. die Positionen des betreffenden Fokus auf dem Substrat variabel einstellbar sind. Das Laserlicht und entsprechend die Perforation kann somit stufenlos und frei elektronisch programmierbar beeinflußt werden. Im Fall einer gezielten Unterbrechung sind das Ergebnis z. B. einzelne Löcher, deren Abstand ein Vielfaches des bisher üblichen Lochabstandes (z. B. das Zehnfache oder Einhundertfache) betragen kann. Es kann jedoch nach wie vor z. B. auch eine Perforation von unverändert hoher Lochdichte erzeugt werden. Es besteht jedoch jederzeit die Möglichkeit, die jeweiligen Strahlpfade zu beliebigen Zeitpunkten jeweils beliebig lange zu unterbrechen. Zum Ausgleich des mechanischen Versatzes der einzelnen Fokussieroptiken über dem Substrat muß es möglich sein, jede Einzelspur der Perforation entsprechend zeitversetzt zu unterbrechen beziehungsweise anzusteuern.

Vorzugsweise ist die Ansteuerelektronik mit dem Substrattransport, d. h. z. B. dem Transport der betreffenden Materialbahn, synchronisierbar. Alternativ oder zusätzlich kann sie auch mit der Frequenz des Drehspiegels bzw. Polygon-Drehspiegels synchronisierbar sein.

Bei einer zweckmäßigen praktischen Ausführungsform ist der opto-mechanische Schalter bzw. Variator durch ein Galvanometer antreibbar.

Der opto-mechanische Schalter kann beispielsweise einen zur Unterbrechung des betreffenden Strahlpfades in den Strahlpfad schwenkbaren Reflektor umfassen. Bei nicht in den Strahlpfad verschwenktem Reflektor wird der Laserlichtstrahl durchgelassen (transmissive Lösung). Ein wesentlicher Vorteil einer solchen Ausführungsform liegt darin, daß der transmittierte, d.h. der zur Bearbeitung verwendete Strahl nicht durch thermische oder andere eventuelle Unzulänglichkeiten des opto-mechanischen Schalters bzw. Reflektors beeinflußt werden kann.

Der opto-mechanische Schalter bzw. Variator kann jedoch beispielsweise auch einen drehbaren Facettenspiegel oder einen drehbaren Prismenspiegel umfassen. Ein Vorteil dieser reflektiven Ausführung liegt in der gut beherrschbaren optischen Kante. Die Facettenkante ist angesichts flacherer Winkel deutlich unkritischer. Wie bei der transmissiven Ausführung erhält man auch hier wieder einen relativ kompakten Aufbau. Die infolge der Restabsorption vorhandene optische Dauerbelastung fällt praktisch nicht ins Gewicht, da davon ausgegangen werden kann, daß die Mehrzahl der Pulse unterdrückt, d.h. abgelenkt und vernichtet werden muß.

Auch hier ist es beispielsweise möglich, durch eine Verwendung von Zylinderlinsen einen Linien-Zwischenfokus zu erzeugen. Grundsätzlich sind jedoch auch in diesem Fall insbesondere auch wieder sphärische Linsen verwendbar.

In bestimmten Fällen kann es auch von Vorteil sein, wenn der opto-mechanische Schalter bzw. Variator einen kontinuierlich antreibbaren Drehspiegel umfaßt. Dabei kann bei festem Tastverhältnis die Frequenz frei programmierbar sein. Der Antrieb dieses Drehspiegels kann mit dem zuvor erwähnten, als optischer Multiplexer dienenden Drehspiegel synchronisiert sein.

Ein jeweiliger opto-mechanischer Variator ist vorzugsweise so ansteuerbar, daß sich die Position des betreffenden Fokus auf dem Substrat von Laserpuls zu Laserpuls ändert.

In bestimmten Fällen kann es auch von Vorteil sein, wenn in wenigstens zwei einander benachbarten Strahlpfaden jeweils ein opto-mechanischer Variator vorgesehen ist und die opto-mechanischen Variatoren so ansteuerbar sind, daß die beiden betreffenden Behandlungsspuren, vorzugsweise Perforationsspuren, auf dem Substrat ineinander laufen.

Insbesondere die zuvor erwähnten reflektiven Varianten, bei denen der Laserstrahl durch ein jeweiliges opto-mechanisches Element in den betreffenden Stahlenpfad reflektiert wird, ermöglichen es auch, eine insbesondere beliebig einstellbare "Unordnung" des Perforationsmusters, d.h. insbesondere eine Art "Chaos-Perforation", zu erzeugen. In bestimmten Fällen, z.B. zur Erzeugung einer visuellen Unordnung im Perforationsmuster, die beispielsweise der "Unsichtbarmachung" dienen kann, ist es zweckmäßig, bei einer jeweiligen reflektiven Ausführungsvariante die Winkelauslenkung von Laserimpuls zu Laserimpuls unterschiedlich zu wählen. Damit ergibt sich anstelle einer geraden Perforationsspur eine frei programmierbare "zittrige" oder "tänzelnde" Einzelspur. In der Summe von zwei oder mehreren programmierbaren "tänzelnden" Perforationsspuren innerhalb einer Zone kann somit eine chaotisch aussehende Verteilung erzeugt werden, was die Unsichtbarkeit für bestimmte Perforationen deutlich verbessert. Die Lochqualität und -dichte über eine gewisse Fläche erzielt man im Gegensatz zu herkömmlichen Verfahren mit dem gleichen Wirkungsgrad.

Um einen praktikablen Winkelbereich ohne Abschattung und Leistungsverlust zu erhalten, sollte der opto-mechanische Schalter bzw. Variator oder "Wackelspiegel" nahe an der den Laserstrahl auf das Substrat fokussierenden Linsenanordnung angeordnet sein.

Zur Absorption eines jeweiligen vom opto-mechanischen Schalter reflektierten Laserstrahls kann ein Strahlabsorber vorgesehen sein.

Zwischen den beiden Anordnungen von nebeneinander liegenden Sammellinsen können Umlenkspiegel angeordnet sein.

Weitere vorteilhafte Ausführungsformen der erfindungsgemäßen Vorrichtung ergeben sich aus den Unteransprüchen.

Die Erfindung wird im folgenden anhand von Ausführungsbeispielen unter Bezugnahme auf die Zeichnungen näher erläutert; in dieser zeigen:
- Fig. 1: eine schematische, vereinfachte Darstellung einer Vorrichtung zur Substratbehandlung mittels Laserstrahlung,
- Fig. 2: eine schematische Teildarstellung einer Ausführungsform der Vorrichtung mit im Bereich des Zwischenfokus eines teleskopartigen Linsensystems angeordnetem opto-mechanischem Schalter,
- Fig. 3: eine schematische Teildarstellung einer Ausführungsform der Vorrichtung mit einem einen Facettenspiegel umfassenden optomechanischen Schalter,
- Fig. 4: eine schematische Teildarstellung einer Ausführungsform der Vorrichtung mit einem als opto-mechanischer Schalter dienenden kontinuierlich antreibbaren Drehspiegel,
- Fig. 5: eine schematische Teildarstellung einer Ausführungsform der Vorrichtung mit einem einen Facettenspiegel umfassenden optomechanischen Variator, mit dem die Position eines betreffenden Fokus auf dem Substrat variierbar ist,
- Fig. 6: eine schematische Teildarstellung einer Ausführungsform der Vorrichtung mit einem als opto-mechanischer Variator dienenden kontinuierlich antreibbaren Polygon-Drehspiegel, mit dem die Position eines betreffenden Fokus auf dem Substrat variierbar ist, und
- Fig. 7 a bis 7 d: Beispiele unterschiedlicher, mittels der Vorrichtung erzeugbarer Perforationsarten.

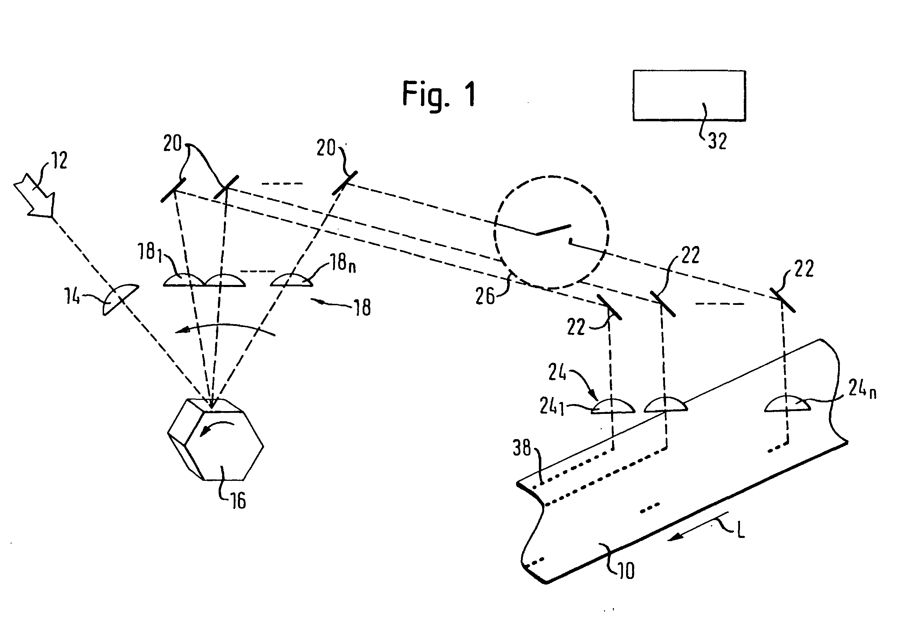

Fig. 1 zeigt in schematischer, vereinfachter Darstellung eine Vorrichtung zur Behandlung eines Substrats 10, hier einer in Transportrichtung L bewegten Materialbahn wie beispielsweise einer Verpackungsfolie oder einer Papierbahn, mittels Laserstrahlung.

Dabei durchläuft der von einem Laser 12 kommende Lichtstrahl eine Eintritts- oder Sammellinse 14, deren Brennpunkt beziehungsweise Strichebene auf einer Fläche eines im Strahlengang hinter der Sammellinse 14 angeordneten Polygon-Drehspiegels 16 liegt.

Der in der Figur 1 dargestellte Polygon-Drehspiegel 16 weist beispielsweise sechs Facetten auf. Grundsätzlich ist jedoch auch eine andere Anzahl von Facetten möglich. Sie hängt für eine vorgegebene Zerhackungsfrequenz auch von der mit dem Polygon-Drehspiegel 16 erreichbaren Drehzahl ab. So verwendet man in der Praxis bei gleichem Polygondurchmesser verschiedene Facetten-Anzahlen und die gleiche maximale Drehzahl. Ein wichtiges Kriterium bei der Wahl der Facetten bzw. Facetten-Anzahl ist der gewünschte Fächerwinkel, d.h. die gewünschte Einzelstrahl-Anzahl, die gleich der Anzahl von Perforationsspuren ist.

Bei sich drehendem Polygon-Drehspiegel 16 wird der einfallende, reflektierte Licht- bzw. Laserstrahl über eine Anordnung 18 von nebeneinander liegenden Kollimator- oder Sammellinsen 18₁ - 18ₙ verschwenkt. Trifft der einfallende Laserstrahl auf die nächste Facette des Polygon-Drehspiegels 16, so springt der reflektierte Strahl zurück und überstreicht von neuem den betreffenden, die Sammellinsen 18₁ - 18ₙ umfassenden Winkelbereich.

Die eine-gleich Brennweite aufweisenden Sammellinsen 18₁ - 18ₙ sind so angeordnet, daß ihr Brennpunkt beziehungsweise ihre Brennebene mit dem Brennpunkt beziehungsweise der Brennebene der Sammellinse 14 auf dem Polygon-Drehspiegel 16 ungefähr oder genau zusammenfällt. Das die Sammellinsen 18₁ - 18ₙ verlassende Licht ist daher wieder annähernd parallel gerichtet.

Die Sammellinse 14 und die Sammellinsen 18₁ - 18ₙ können beispielsweise als sphärische und/oder zylindrische Linsen vorgesehen sein.

Die die Linsenanordnung 18 verlassenden Lichtstrahlen werden beim vorliegenden Ausführungsbeispiel über Umlenkspiegel 20, 22 auf eine Anordnung von nebeneinander liegenden Fokussier- oder Sammellinsen 24₁ - 24ₙ gerichtet, die in einem ungefähr ihrer Brennweite entsprechenden Abstand vom Substrat 10 angeordnet sind. Dabei umfaßt diese Linsenanordnung 24 vorzugsweise sphärische Sammellinsen 24₁ - 24ₙ, die die auf sie auftreffenden parallelen Lichtstrahlen auf das im Strahlengang hinter dem Linsensystem 24 liegende Substrat 10 fokussieren. Die Größe der Einzellinseh 24₁ - 24ₙ des Linsensystems 24 entspricht vorzugsweise der Größe der Einzellinsen 18₁ - 18ₙ des Linsensystems 18, so daß jedem Linsenabschnitt der Linsen 18₁ - 18ₙ ein entsprechender Abschnitt der Linsen 24₁ - 24ₙ zugeordnet ist.

In wenigstens einem der zwischen den beiden Linsenanordnungen 18, 22 gebildeten Strahlpfade ist ein opto-mechanischer Schalter 26 vorgesehen, durch den der betreffende Strahlpfad unterbrechbar ist. In der Fig. 1 ist lediglich der Einfachheit halber nur ein solcher opto-mechanischer Schalter 26 angedeutet. Grundsätzlich kann auch in mehreren Strahlpfaden jeweils ein solcher opto-mechanischer Schalter 26 vorgesehen sein. Vorzugsweise ist in jedem zwischen dem Polygon-Drehspiegel 16 und der Linsenanordnung 24 gebildeten Strahlpfaden jeweils ein solcher opto-mechanischer Schalter 26 angeordnet.

Wie sich insbesondere auch aus den Fig. 1 bis 4 ergibt, kann der opto-mechanische Schalter 26 insbesondere im Bereich des Zwischenfokus eines durch zwei Linsenanordnungen 28, 30 gebildeten teleskopartigen Linsensystems angeordnet sein.

Dem beziehungsweise den opto-mechanischen Schaltern 26 ist vorzugsweise eine insbesondere frei programmierbare Ansteuerelektronik 32 zugeordnet, über die die Unterbrechungszeiten und/oder -zeitdauern variabel einstellbar sind. Diese Ansteuerelektronik 32 ist zweckmäßigerweise mit dem Substrattransport synchronisierbar. Alternativ kann sie auch mit der Frequenz des Drehspiegels bzw. Polygon-Drehspiegels synchronisierbar sein.

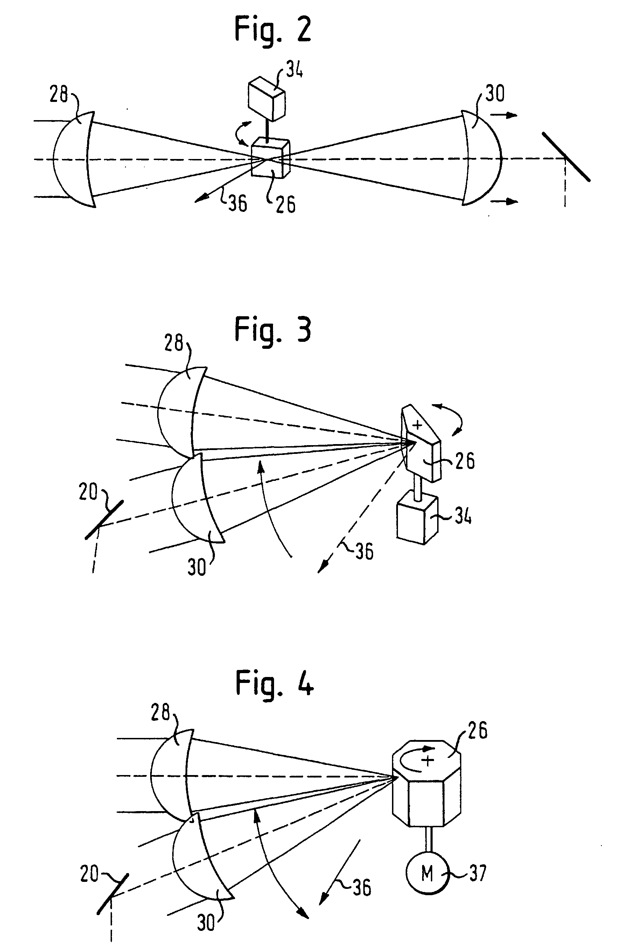

Wie sich insbesondere auch anhand der Fig. 2 und 3 ergibt, kann der opto-mechanische Schalter beispielsweise durch ein Galvanometer 34 antreibbar sein.

Fig. 2 zeigt in schematischer Teildarstellung eine Ausführungsform der Vorrichtung mit einem im Bereich des Zwischenfokus eines teleskopartigen Linsensystems 28, 30 angeordneten, über ein Galvanometer 34 angetriebenen opto-mechanischen Schalter 26, der durch einen zur Unterbrechung des betreffenden Strahlpfades in den Strahlpfad schwenkbaren Reflektor umfaßt. Bei geschlossenem opto-mechanischem Schalter 26 wird der Laserstrahl zu einem Strahlabsorber 36 reflektiert. Ist der z. B. durch eine Reflektionsplatte gebildete Reflektor aus dem Strahlpfad herausgeschwenkt, so kann der Laserstrahl frei passieren (transmissive Lösung).

Fig. 3 zeigt in schematischer Teildarstellung eine Ausführungsform der Vorrichtung mit einem im Bereich des Zwischenfokus eines teleskopartigen Linsensystems 28, 30 angeordneten, durch einen Facettenspiegel gebildeten opto-mechanischen Schalter 26. Auch dieser Facettenspiegel ist wieder über ein schnelles Galvanometer 34 antreibbar. Je nach der jeweiligen Stellung des opto-mechanischen Schalters beziehungsweise Facettenspiegels wird der Laserstrahl zur Linsenanordnung 30 oder zu einem Strahlabsorber 36 reflektiert. Grundsätzlich kann auch ein Prismenspiegel eingesetzt werden.

Auch den opto-mechanischen Schaltern 34 der beiden in den Fig. 2 und 3 gezeigten Ausführungsformen kann jeweils wieder eine insbesondere frei programmierbare Ansteuerelektronik 32 zugeordnet sein.

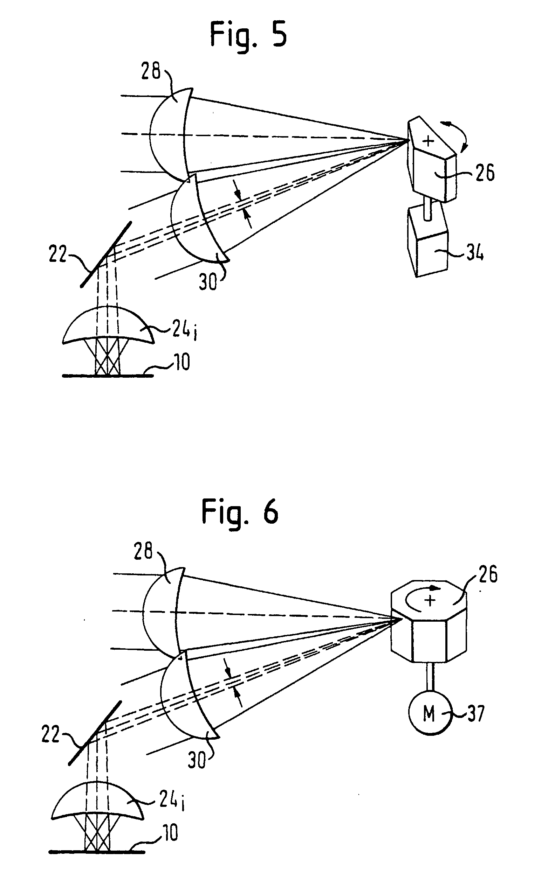

Fig. 4 zeigt in schematischer Teildarstellung eine Ausführungsform der Vorrichtung mit einem als opto-mechanischer Schalter 26 dienenden, kontinuierlich antreibbaren Drehspiegel mit festem Tastverhältnis oder diskontinuierlich antreibbaren Drehspiegel bei z. B. wieder über eine Ansteuerelektronik 32 (vgl. Fig. 1) frei programmierbarer Frequenz. Auch dieser durch einen Drehspiegel gebildete opto-mechanische Schalter 26 ist wieder im Bereich des Zwischenfokus eines durch zwei Linsenanordnungen 28, 30 gebildeten teleskopartigen Linsensystems 28, 30 angeordnet.

Je nach Drehstellung des opto-mechanischen Schalters beziehungsweise Drehspiegels 26 wird der von der Linsenanordnung 28 kommende Laserstrahl entweder zur Linsenanordnung 30 oder zu einem Strahlabsorber 36 reflektiert. Auch hier liegt somit wieder eine reflektive Lösung vor.

Der dem opto-mechanischen Schalter 26 zugeordnete Antrieb 37, insbesondere ein kontinuierlich oder diskontinuierlich drehender Elektromotor, ist vorzugsweise mit dem als optischer Multiplexer dienenden Polygon-Drehspiegels 16 synchronisiert.

Wie beispielsweise anhand der Fig. 1 zu erkennen ist, kann z. B. eine in Transportrichtung L bewegte Materialbahn 10 (Substrat) mit quer zur Transportrichtung L der Bahn liegenden Reihen kleiner Löcher 38 perforiert werden. Die Zerhackungsfrequenz kann über die Anzahl der Facetten des Polygon-Drehspiegels 16 und dessen Drehzahl nahezu beliebig eingestellt werden. Über den bzw. die opto-mechanischen Schalter 26 kann eine jeweilige Perforationszone auf der Materialbahn 10 an einer beliebigen Stelle und mit einstellbarer, beliebiger Dauer unterbrochen werden. Dabei ist insbesondere eine stufenlose und frei elektronisch programmierbare Unterbrechung des Laserlichts und eine entsprechende Perforation möglich. Aufgrund des mechanischen Versatzes der einzelnen Fokussieroptiken kann jede Einzelspur der Perforation entsprechend zeitversetzt unterbrochen beziehungsweise angesteuert werden können. Durch eine entsprechende Synchronisation mit dem Bahntransport und einem entsprechenden Zeitversatz pro Bearbeitungskopf kann insbesondere eine quasiparallele, d. h. unterbrochene Perforation erzeugt werden. Mit den in den Fig. 3 und 4 dargestellten reflektiven Varianten ist es grundsätzlich auch möglich, eine insbesondere beliebig einstellbare "Unordnung" des Perforationsmusters, d.h. z.B. eine Art "Chaos-Perforation", zu erzeugen. Dazu kann das jeweilige opto-mechanische Element 26 zusätzlich (oder alternativ) als Variator eingesetzt werden, durch den die Position des betreffenden Fokus auf dem Substrat 10 für die jeweilige Perforationsspur variierbar ist (vgl. die Figuren 5 und 6).

Fig. 5 zeigt in schematischer Teildarstellung eine mit der der Fig. 3 vergleichbare Ausführungsform der Vorrichtung mit einem einen Facettenspiegel oder Prisma umfassenden, über ein Galvanometer 34 antreibbaren opto-mechanischen Element 26, das hier jedoch zusätzlich als Variator dient, mit dem die Position des Fokus für die betreffende Perforationsspur auf dem Substrat 10 variierbar ist. Dazu sind über die betreffende Ansteuerelektronik 32 (vgl. auch Figur 1) zusätzlich kleine Winkelauslenkungen von Laserimpuls zu Laserimpuls frei programmierbar. Wie durch die Pfeile angedeutet kann dabei z.B. ein relativ kleiner Schwenkbereich von beispielsweise etwa 1° abgedeckt werden. Hinter der betreffenden Linse 24ᵢ der Linsenanordnung 24 ergeben sich entsprechend unterschiedlich positionierte Foki bzw. Behandlungsstellen.

Es ist somit insbesondere auch möglich, z.B. zur Erzeugung einer visuellen Unordnung im Perforationsmuster, die beispielsweise der "Unsichtbarmachung" dienen kann, bei einer jeweiligen reflektiven Ausführungsvariante die Winkelauslenkung von Laserimpuls zu Laserimpuls unterschiedlich zu wählen. Insbesondere mit einer entsprechend frei programmierbaren Ansteuerelektronik (vgl. auch Figur 1) kann demnach anstelle einer geraden Perforationsspur beispielsweise eine "zittrige" oder "tänzelnde" Einzelspur erzeugt werden. In der Summe von zwei oder mehreren programmierbaren "tänzelnden" Perforationsspuren innerhalb einer Zone kann somit eine chaotisch aussehende Verteilung erzeugt werden, was die Unsichtbarkeit für bestimmte Perforationen deutlich verbessert.

Um einen praktikablen Winkelbereich ohne Abschattung und Leistungsverlust zu erhalten, sollte der opto-mechanische Schalter bzw. Variator oder "Wackelspiegel" nahe an der den Laserstrahl auf das Substrat fokussierenden Linsenanordnung angeordnet sein.

Fig. 6 zeigt in schematischer Teildarstellung eine der der Fig. 4 vergleichbare Ausführungsform der Vorrichtung mit einem einen Polygon-Drehspiegel umfassenden, über einen Elektromotor 37 kontinuierlich oder diskontinuierlich antreibbaren opto-mechanischen Element 26, das jedoch auch hier wieder zusätzlich als Variator dient, mit dem die Position des Fokus für die betreffende Perforationsspur auf dem Substrat 10 variierbar ist. Der Polygon-Drehspiegel 26 sollte im Vergleich zur Ausführung gemäß Figur 4 eine wesentlich höhere Anzahl von Facetten aufweisen.

Während die in der Fig. 5 dargestellte Ausführungsform aus Prisma und Galvanometer hinsichtlich der Wahl der jeweiligen Abweichungen der Fokusposition relativ variabel, jedoch relativ langsam ist, kann die eher schnellere Ausführungsform gemäß Figur 6 aus Polygon-Drehspiegel und Elektromotor beispielsweise zur Erzeugung einer insbesondere festen Wobbelbewegung ansteuerbar sein.

Obwohl im Zusammenhang mit den zuvor beschriebenen Ausführungsformen gemäß den Fig. 5 und 6 davon ausgegangen wurde, daß das jeweilige opto-mechanische Element 26 gleichzeitig sowohl als Schalter als auch als Variator vorgesehen ist, ist grundsätzlich auch der Einsatz eines solchen opto-mechanischen Elements 26 lediglich als Variator denkbar. Daß auch ein Einsatz eines solchen opto-mechanischen Elements 26 lediglich als Schalter möglich ist, ergibt sich bereits aus den oben beschriebenen Ausführungsformen gemäß den Fig. 1 bis 4.

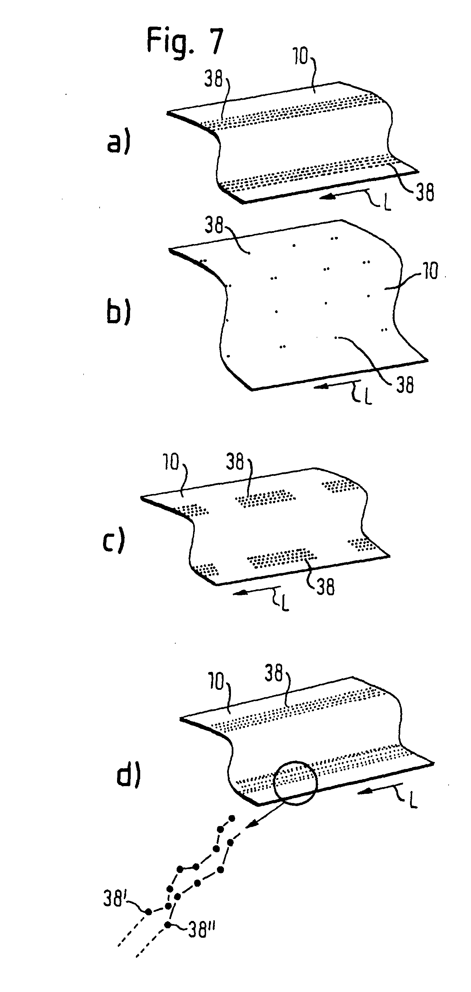

Die Fig. 7 a bis 7 d zeigen Beispiele unterschiedlicher, mittels der Vorrichtung erzeugbarer Perforationsarten, wobei in den Fig. 7 a bis 7 c lediglich geradlinige Perforationsspuren und in der Fig. 7 d sowohl geradlinige als auch "zittrige" oder "tänzelnde" Perforationsspuren dargestellt sind.

So zeigt die Fig. 7 a z. B. eine Papierperforation für Zigarettenmundstückpapier, die sich durch eine hohe Lochdichte in Bahnvorschubrichtung L und die Konzentration auf wenige Zonen quer zur Bahn auszeichnet.

Die Fig. 7 b zeigt eine Perforation von Verpackungsfolien, die sich durch eine niedrige Lochdichte in Bahnvorschubrichtung L sowie eine gleichmäßigere Verteilung quer zu Bahn auszeichnet.

Die in der Fig. 7 c dargestellte unterbrochene Papierperforation für Zigarettenmundstückpapier zeichnet sich durch eine hohe Lochdichte in Bahnvorschubrichtung L und die Konzentration auf wenige Zonen quer zur Bahn aus.

Die Fig. 7 d zeigt eine Papierperforation für Zigarettenmundstückpapier mit verbesserter "Unsichtbarkeit", die sich durch eine hohe Lochdichte in Bahnvorschubrichtung, eine Konzentration auf wenige Zonen quer zur Bahn und eine Zickzack-Anordnung mit chaotisch wirkender Verteilung auszeichnet. Wie der Figur 7d entnommen werden kann, können benachbarte Perforationsspuren mit z.B. zickzackförmig angeordneten Löchern 38' bzw. 38" insbesondere auch ineinander laufen.

Es sind beliebige weitere Perforationsarten möglich.

### BEZUGSZEICHENLISTE

- 10: Substrat, bewegte Materialbahn
- 12: Laser
- 14: Eintritts- oder Sammellinse
- 16: Polygon-Drehspiegel
- 18: Linsenanordnung
- 18₁ - 18ₙ: Sammellinsen
- 20: Umlenkspiegel
- 24: Linsenanordnung
- 24₁ - 24ₙ: Sammellinsen
- 26: opto-mechanischer Schalter
- 28: Linsenanordnung
- 30: Linsenanordnung
- 32: Ansteuerelektronik
- 34: Galvanometer
- 36: Strahlabsorber
- 37: Antrieb, Elektromotor
- 38: Loch
- 38': Loch
- 38": Loch

- L: Transportrichtung

## Patentansprüche

1. Vorrichtung zur Substratbehandlung mittels Laserstrahlung, mit einem Drehspiegel (16), durch den ein einfallender Laserstrahl reflektiert wird und über eine Anordnung (24) von nebeneinander liegenden Sammellinsen (24₁ - 24ₙ) schwenkbar ist, die in einem ihrer Brennweite entsprechenden Abstand vom durch eine bewegte Materialbahn gebildeten Substrat (10) angeordnet sind,
**dadurch gekennzeichnet,**
**dass** in wenigstens einem der zwischen dem Drehspiegel (16) und den Sammellinsen (24₁ - 24ₙ) gebildeten Strahlpfade ein opto-mechanischer Schalter und/oder Variator (26) vorgesehen ist, durch den der betreffende Strahlpfad unterbrechbar bzw. die Position des betreffenden Fokus auf dem Substrat variierbar ist.

2. Vorrichtung nach Anspruch 1,
**dadurch gekennzeichnet,**
**dass** in jedem zwischen dem Drehspiegel (16) und den Sammellinsen (24₁ - 24ₙ) gebildeten Strahlpfad jeweils ein opto-mechanischer Schalter bzw. Variator (26) vorgesehen ist.

3. Vorrichtung nach Anspruch 1 oder 2,
**dadurch gekennzeichnet,**
**dass** der einfallende Laserstrahl durch eine Linse (14) auf den Drehspiegel (16) fokussiert wird, dass zwischen dem Drehspiegel (16) und der Anordnung (24) von in einem ihrer Brennweite entsprechenden Abstand vom Substrat (10) angeordneten nebeneinander liegenden Sammellinsen (24₁ - 24ₙ) eine weitere Anordnung (18) von nebeneinander liegenden Sammellinsen (18₁ - 18ₙ) vorgesehen ist, die in einem ihrer Brennweite entsprechenden Abstand vom Drehspiegel (16) angeordnet sind, und daß ein jeweiliger opto-mechanischer Schalter bzw. Variator (26) zwischen den beiden Anordnungen (18, 24) von nebeneinander liegenden Sammellinsen (18₁ - 18ₙ bzw. 24₁-24ₙ) angeordnet ist.

4. Vorrichtung nach einem der vorhergehenden Ansprüche,
**dadurch gekennzeichnet,**
**daß** der opto-mechanische Schalter bzw. Variator (26) im Bereich des Zwischenfokus eines teleskopartigen Linsensystems (28, 30) angeordnet ist.

5. Vorrichtung nach einem der vorhergehenden Ansprüche,
**dadurch gekennzeichnet,**
**daß** als Drehspiegel ein Polygon-Drehspiegel (16) vorgesehen ist.

6. Vorrichtung nach einem der vorhergehenden Ansprüche,
**dadurch gekennzeichnet,**
**daß** die Linsen (14, 18₁ - 18ₙ), zwischen denen der Drehspiegel (16) liegt, sphärische und/oder zylindrische Sammellinsen sind.

7. Vorrichtung nach einem der vorhergehenden Ansprüche,
**dadurch gekennzeichnet,**
**daß** zwischen den beiden Anordnungen (18, 24) von nebeneinander liegenden Sammellinsen (18₁ - 18ₙ bzw. 24₁ - 24ₙ) Umlenkspiegel (20, 22) angeordnet sind.

8. Vorrichtung nach einem der vorhergehenden Ansprüche,
**dadurch gekennzeichnet,**
**daß** dem opto-mechanischen Schalter (26) eine insbesondere frei programmierbare Ansteuerelektronik (32) zugeordnet ist, über die die Unterbrechungszeiten und/oder -zeitdauern bzw. die Positionen des betreffenden Fokus auf dem Substrat variabel einstellbar sind.

9. Vorrichtung nach Anspruch 8,
**dadurch gekennzeichnet,**
**daß** die Ansteuerelektronik (32) mit dem Substrattransport synchronisierbar ist.

10. Vorrichtung nach Anspruch 8 oder 9,
**dadurch gekennzeichnet,**
**daß** die Ansteuerelektronik (32) mit der Frequenz des Drehspiegels bzw. Polygon-Drehspiegels (16) synchronisierbar ist.

11. Vorrichtung nach einem der vorhergehenden Ansprüche,
**dadurch gekennzeichnet,**
**daß** der opto-mechanische Schalter bzw. Variator (26) durch ein Galvanometer (34) antreibbar ist.

12. Vorrichtung nach einem der vorhergehenden Ansprüche,
**dadurch gekennzeichnet,**
**daß** der opto-mechanische Schalter (26) einen zur Unterbrechung des betreffenden Strahlpfades in den Strahlpfad schwenkbaren Reflektor umfaßt.

13. Vorrichtung nach einem der vorhergehenden Ansprüche,
**dadurch gekennzeichnet,**
**daß** der opto-mechanische Schalter bzw. Variator (26) einen drehbaren Facettenspiegel umfaßt.

14. Vorrichtung nach einem der vorhergehenden Ansprüche,
**dadurch gekennzeichnet,**
**daß** der opto-mechanische Schalter bzw. Variator (26) einen drehbaren Prismenspiegel umfaßt.

15. Vorrichtung nach einem der vorhergehenden Ansprüche,
**dadurch gekennzeichnet,**
**daß** der opto-mechanische Schalter bzw. Variator (26) einen kontinuierlich oder diskontinuierlich antreibbaren Drehspiegel, insbesondere Polygon-Drehspiegel, umfaßt.

16. Vorrichtung nach einem der vorhergehenden Ansprüche,
**dadurch gekennzeichnet,**
**daß** der opto-mechanische Variator (26) so ansteuerbar ist, daß sich die Position des betreffenden Fokus auf dem Substrat von Laserpuls zu Laserpuls ändert.

17. Vorrichtung nach einem der vorhergehenden Ansprüche,
**dadurch gekennzeichnet,**
**daß** in wenigstens zwei einander benachbarten Strahlpfaden jeweils ein opto-mechanischer Variator (26) vorgesehen ist und daß die opto-mechanischen Variatoren (26) so ansteuerbar sind, daß die beiden betreffenden Behandlungsspuren, vorzugsweise Perforationsspuren, auf dem Substrat (10) ineinander laufen.

18. Vorrichtung nach einem der vorhergehenden Ansprüche,
**dadurch gekennzeichnet,**
**daß** zur Absorption eines jeweiligen vom opto-mechanischen Schalter (26) reflektierten Laserstrahls ein Strahlabsorber vorgesehen ist.

## Claims

1. An apparatus for substrate treatment by means of laser radiation, comprising a rotating mirror (16) by which an incident laser beam is reflected and is pivotable via an arrangement (24) of converging lenses (24₁ - 24ₙ) which lie next to one another and which are arranged at a spacing from the substrate (10) corresponding to their focal lengths,
**characterized in that**
an opto-mechanical switch and/or variator (26) is provided in at least one of the beam paths formed between the rotating mirror (16) and the converging lenses (24₁ - 24ₙ) through which the relevant beam path can be interrupted and/or the position of the relevant focus on the substrate can be varied.

2. An apparatus in accordance with claim 1, **characterized in that** a respective mechanical switch or variator (26) is provided in each beam path formed between the rotating mirror (16) and the converging lenses (24₁ - 24ₙ).

3. An apparatus in accordance with claim 1 or claim 2, **characterized in that** the incident laser beam is focused onto the rotating mirror (16) by a lens (14); and **in that** a further arrangement (18) of converging lenses (18₁ - 18ₙ) which lie next to one another and which are arranged at a spacing from the rotating mirror (16) corresponding to their focal lengths, is provided between the rotating mirror (16) and the arrangement (24) of converging lenses (24₁ - 24ₙ) lying next to one another and arranged at a spacing from the substrate (10) corresponding to their focal lengths; and **in that** a respective opto-mechanical switch or variator (26) is arranged between the two arrangements (18, 24) of converging lenses (18₁ - 18ₙ or 24₁ - 24ₙ) lying next to one another.

4. An apparatus in accordance with any one of the preceding claims, **characterized in that** the opto-mechanical switch or variator (26) is arranged in the region of the intermediate focus of a telescopr-type lens system (28, 30).

5. An apparatus in accordance with any one of the preceding claims, **characterized in that** a rotating polygonal mirror (16) is provided as the rotating mirror.

6. An apparatus in accordance with any one of the preceding claims, **characterized in that** the lenses (14, 18₁ - 18ₙ), between which the rotating mirror (16) lies, are spherical and/or cylindrical converging lenses.

7. An apparatus in accordance with any one of the preceding claims, **characterized in that** deflection mirrors (20, 22) are arranged between the two arrangements (18, 24) of converging lenses (18₁- 18ₙ or 24₁ - 24ₙ) lying next to one another.

8. An apparatus in accordance with any one of the preceding claims, **characterized in that** control electronics (32), in particular freely programmable control electronics, are associated with the opto-mechanical switch (26) and the interruption times and/or interruption time periods and/or the positions of the relevant focus on the substrate can thereby be variable adjusted.

9. An apparatus in accordance with claim 8, **characterized in that** the control electronics (32) can be synchronized with the substrate transport.

10. An apparatus in accordance with claim 8 or claim 9, **characterized in that** the control electronics (32) can be synchronized with the frequency of the rotating mirror or rotating polygonal mirror (16).

11. An apparatus in accordance with any one of the preceding claims, **characterized in that** the opto-mechanical switch or variator (26) can be driven by a galvanometer (34).

12. An apparatus in accordance with any one of the preceding claims, **characterized in that** the opto-mechanical switch (26) includes a reflector pivotable into the beam path for the interruption of the relevant beam path.

13. An apparatus in accordance with any one of the preceding claims, **characterized in that** the opto-mechanical switch or variator (26) includes a rotatable facetted mirror.

14. An apparatus in accordance with any one of the preceding claims, **characterized in that** the opto-mechanical switch or variator (26) includes a rotatable prism mirror.

15. An apparatus in accordance with any one of the preceding claims, **characterized in that** the opto-mechanical switch or variator (26) includes a continuously or discontinuously drivable rotating mirror, in particular a rotating polygonal mirror.

16. An apparatus in accordance with any one of the preceding claims, **characterized in that** the opto-mechanical variator (26) can be controlled such that the position of the relevant focus on the substrate changes from laser pulse to laser pulse.

17. An apparatus in accordance with any one of the preceding claims, **characterized in that** a respective opto-mechanical variator (26) is provided in at least two mutually adjacent beam paths; and **in that** the opto-mechanical variators (26) can be controlled such that the two relevant treatment tracks, preferably perforation tracks, run into one another on the substrate (10).

18. An apparatus in accordance with any one of the preceding claims, **characterized in that** a beam absorber is provided for the absorption of a respective laser beam reflected by the opto-mechanical switch (26).

## Revendications

1. Dispositif pour le traitement de substrats par rayonnement laser, comportant un miroir rotatif (16) par lequel est réfléchi un rayon laser incident et qui est mobile en pivotement par un agencement (24) de lentilles convergentes (24₁ à 24ₙ) situées les unes à côté des autres et agencées à une distance du substrat (10), formé par une bande de matériau en déplacement, distance qui correspond à leur distance focale,
**caractérisé en ce que**
dans l'un au moins des trajets de rayonnement formés entre le miroir rotatif (16) et les lentilles convergentes (24₁ à 24ₙ) est prévu un interrupteur et/ou un variateur opto-mécanique (26) par lequel le trajet de rayonnement concerné peut être interrompu ou par lequel la position du foyer concerné sur le substrat peut être variée.

2. Dispositif selon la revendication 1, **caractérisé en ce qu'**il est prévu un interrupteur ou un variateur opto-mécanique (26) respectif dans chaque trajet de rayonnement formé entre le miroir rotatif (16) et les lentilles convergentes (24₁ à 24ₙ).

3. Dispositif selon l'une ou l'autre des revendications 1 et 2, **caractérisé en ce que** le rayon laser incident est focalisé sur le miroir rotatif (16) par une lentille (14), **en ce qu'**il est prévu un autre agencement (18) de lentilles convergentes (18₁ à 18ₙ) situées les unes à côté des autres entre le miroir rotatif (16) et l'agencement (24) de lentilles convergentes (24₁ à 24ₙ) situées les unes à côté des autres et agencées à une distance du substrat (10) qui correspond à leur distance focale, lesquelles sont agencées à une distance du miroir rotatif (16) qui correspond à leur distance focale, et **en ce qu'**il est prévu un interrupteur ou un variateur opto-mécanique respectif (26) entre les deux agencements (18, 24) de lentilles convergentes (18₁ à 18ₙ ou 24₁ à 24ₙ) situées les unes à côté des autres.

4. Dispositif selon l'une des revendications précédentes, **caractérisé en ce que** l'interrupteur ou le variateur opto-mécanique (26) est agencé dans la zone du foyer intermédiaire d'un système de lentilles télescopique (28, 30).

5. Dispositif selon l'une des revendications précédentes, **caractérisé en ce qu'**il est prévu à titre de miroir rotatif un miroir rotatif polygonal (16).

6. Dispositif selon l'une des revendications précédentes, **caractérisé en ce que** les lentilles (14, 18₁ à 18ₙ) entre lesquelles se trouve le miroir rotatif (16) sont des lentilles convergentes sphériques et/ou cylindriques.

7. Dispositif selon l'une des revendications précédentes, **caractérisé en ce que** des miroirs de renvoi (20, 22) sont agencés entre les deux agencements (18, 24) de lentilles convergentes (18₁ à 18ₙ ou 24₁ à 24ₙ) situées les unes à côté des autres.

8. Dispositif selon l'une des revendications précédentes, **caractérisé en ce qu'**à l'interrupteur opto-mécanique (26) est associée une unité électronique de commande (32) en particulier librement programmable, au moyen de laquelle peuvent être réglés de façon variable les périodes d'interruption et/ou les durées d'interruption ou les positions du foyer concerné sur le substrat.

9. Dispositif selon la revendication 8, **caractérisé en ce que** l'unité électronique de commande (32) est susceptible d'être synchronisée avec le transport du substrat.

10. Dispositif selon l'une ou l'autre des revendications 8 et 9, **caractérisé en ce que** l'unité électronique de commande (32) est susceptible d'être synchronisée avec la fréquence du miroir rotatif ou du miroir rotatif polygonal (16).

11. Dispositif selon l'une des revendications précédentes, **caractérisé en ce que** l'interrupteur ou le variateur opto-mécanique (26) est susceptible d'être entraîné par un galvanomètre (34).

12. Dispositif selon l'une des revendications précédentes, **caractérisé en ce que** l'interrupteur opto-mécanique (26) comprend un réflecteur mobile en pivotement jusque dans le trajet de rayonnement pour interrompre le trajet de rayonnement concerné.

13. Dispositif selon l'une des revendications précédentes, **caractérisé en ce que** l'interrupteur ou le variateur opto-mécanique (26) comprend un miroir à facettes rotatif.

14. Dispositif selon l'une des revendications précédentes, **caractérisé en ce que** l'interrupteur ou le variateur opto-mécanique (26) comprend un miroir prismatique rotatif.

15. Dispositif selon l'une des revendications précédentes, **caractérisé en ce que** l'interrupteur ou le variateur opto-mécanique (26) comprend un miroir rotatif susceptible d'être entraîné de façon continue ou discontinue, en particulier un miroir rotatif polygonal.

16. Dispositif selon l'une des revendications précédentes, **caractérisé en ce que** le variateur opto-mécanique (26) est susceptible d'être commandé de telle sorte que la position du foyer concerné sur le substrat se modifie d'une impulsion laser à l'autre.

17. Dispositif selon l'une des revendications précédentes, **caractérisé en ce qu'**il est prévu un variateur opto-mécanique respectif (26) dans au moins deux trajets de rayonnement mutuellement voisins, et **en ce que** les variateurs opto-mécaniques (26) sont susceptibles d'être commandés de telle sorte que les deux pistes de traitement concernées, de préférence des pistes de perforation, sur le substrat (10) convergent l'une dans l'autre.

18. Dispositif selon l'une des revendications précédentes, **caractérisé en ce qu'**il est prévu un absorbeur de rayonnement pour l'absorption d'un rayon laser respectif réfléchi par l'interrupteur opto-mécanique.
